(19) Europäisches Patentamt
European Patent Office
Office européen des brevets

(11) **EP 4 723 214 A1**

(12) **EUROPEAN PATENT APPLICATION**

(43) Date of publication:
08.04.2026 Bulletin 2026/15

(21) Application number: 25198459.7

(22) Date of filing: 27.08.2025

(51) International Patent Classification (IPC):
$H01M\ 4/36^{(2006.01)}$    $H01M\ 4/58^{(2010.01)}$
$H01M\ 4/62^{(2006.01)}$    $H01M\ 10/0525^{(2010.01)}$
$C01B\ 25/00^{(2006.01)}$

(52) Cooperative Patent Classification (CPC):
H01M 4/5825; C01B 25/00; H01M 4/366;
H01M 4/625; H01M 10/0525; H01M 2004/028;
H01M 2004/029

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.10.2024 JP 2024175755

(71) Applicant: TOYOTA JIDOSHA KABUSHIKI
KAISHA
Toyota-shi, Aichi-ken 471-8571 (JP)

(72) Inventors:
• MAHARA, Takanori
Toyota-shi,, 471-8571 (JP)
• EGUCHI, Tatsuya
Kariya-shi,, 448-8671 (JP)
• KIMIJIMA, Takeshi
Kariya-shi,, 448-8671 (JP)

(74) Representative: Kuhnen & Wacker
Patent- und Rechtsanwaltsbüro PartG mbB
Prinz-Ludwig-Straße 40A
85354 Freising (DE)

(54) **POSITIVE ELECTRODE ACTIVE MATERIAL, ELECTRODE, AND BATTERY**

(57) A positive electrode active material comprises a primary particle (1) and a covering (5). The primary particle includes lithium manganese phosphate. The covering (5) covers at least part of a surface of the primary particle (1). In a radial direction of the primary particle (1), the covering (5) includes a first region (5a) and a second region (5b). Each of the first region (5a) and the second region (5b) includes carbon. In TEM-EDS analysis, signal intensity of manganese in the second region (5b) is more than signal intensity of manganese in the first region (5a).

FIG.3

**Description**

CROSS REFERENCE TO RELATED APPLICATIONS

This nonprovisional application is based on Japanese Patent Application No. 2024-175755 filed on October 7, 2024, with the Japan Patent Office, the entire contents of which are hereby incorporated by reference.

BACKGROUND

Field

The present disclosure relates to a positive electrode active material, an electrode, and a battery.

Description of the Background Art

Japanese Patent Laying-Open No. 2019-149355 discloses carbonaceous coating that covers primary particles.

SUMMARY

As a positive electrode active material, lithium manganese phosphate (which may be abbreviated as "LMP" hereinafter) has been researched. Conventionally, suggestions have been made for enhancing electronic conductivity by covering primary particles of LMP with carbon. However, there is room for improvement in endurance.

An object of the present disclosure is to improve endurance.

Hereinafter, the technical configuration and effects of the present disclosure will be described. It should be noted that the action mechanism according to the present disclosure includes presumption. The action mechanism does not limit the technical scope of the present disclosure.

1. An aspect of the present disclosure is a positive electrode active material. The positive electrode active material comprises a primary particle and a covering. The primary particle includes lithium manganese phosphate. The covering covers at least part of a surface of the primary particle. In a radial direction of the primary particle, the covering includes a first region and a second region. Each of the first region and the second region includes carbon. In transmission electron microscope energy dispersive X-ray spectroscopy (TEM-EDS) analysis, signal intensity of manganese in the second region is more than signal intensity of manganese in the first region.

During charge-discharge cycles, manganese (Mn) may elute from LMP. Due to elution of Mn, capacity degradation may be facilitated. Hence, there is a chance that sufficient endurance may not be obtained.

Conventionally, a covering for covering primary particles (LMP) is formed of a carbon monophase region. On the other hand, the covering according to the present disclosure includes a multiphase region. That is, the covering includes a first region and a second region. It is conceivable that the Mn content in the second region is more than that in the first region. It is conceivable that a multiphase covering may inhibit Mn permeation as compared to a monophase covering. When Mn tends not to permeate through the covering, the amount of Mn elution may be reduced. As a result, endurance is expected to be improved.

2. The positive electrode active material according to "1" above may include the following configuration, for example. The first region and the second region satisfy a relationship of "$0.5 < T_2/T_1$". "$T_1$" represents a thickness of the first region in the radial direction. "$T_2$" represents a thickness of the second region in the radial direction.

When the relationship of "$0.5 < T_2/T_1$" is satisfied, the amount of Mn elution is expected to be reduced.

3. The positive electrode active material according to "1" or "2" above may include the following configuration, for example. In the radial direction, the second region is positioned between the first region and the primary particle.

With the second region being positioned on the inner side with respect to the first region, the amount of Mn elution is expected to be reduced.

4. The positive electrode active material according to any one of "1" to "3" above may include the following configuration, for example. In the TEM-EDS analysis, only carbon is detected in the first region.

For example, the first region may be a carbon monophase region.

5. The positive electrode active material according to any one of "1" to "4" above may include the following configuration, for example. The primary particle includes lithium manganese iron phosphate. In the TEM-EDS analysis, carbon, manganese, and iron are detected in the second region.

In LMP, some of Mn may be replaced by iron (Fe). Fe-replaced LMP is also called lithium manganese iron phosphate (LMFP). When the primary particle includes LMFP, the second region may further include Fe in addition to carbon and Mn.

6. The positive electrode active material according to any one of "1" to "5" above may include the following configuration, for example. The first region satisfies a relationship of "1 nm<$T_1$<5 nm".

When the thickness of the first region falls within the range of 1 to 5 nm, the amount of Mn elution is expected to be reduced.

7. The positive electrode active material according to any one of "1" to "6" above may include the following configuration, for example. The first region satisfies a relationship of "1 nm<$T_1$<3 nm".

8. An aspect of the present disclosure is an electrode. The electrode includes a positive electrode layer. The positive electrode layer includes the positive electrode active material according to any one of "1" to "7" above.

The positive electrode layer may also be called "a positive electrode active material layer", "a positive electrode composite material layer", and the like. "Electrode" may be either "a monopolar electrode (a positive electrode)" or "a bipolar electrode" as long as it includes a positive electrode layer.

9. An aspect of the present disclosure is a battery. The battery includes the electrode according to "8" above.

10. The battery according to "9" above may include the following configuration, for example. The battery has a bipolar structure.

The bipolar structure may be formed by stacking bipolar electrodes together. With the bipolar structure, output properties are expected to be enhanced, for example.

In the following, an embodiment of the present disclosure (which may be simply called "the present embodiment" hereinafter) and an example of the present disclosure (which may be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating the area around the outermost surface of a primary particle.
Fig. 2 is a first descriptive view of analysis results.
Fig. 3 is a second descriptive view of analysis results.
Fig. 4 is a conceptual view illustrating a secondary particle according to the present embodiment.
Fig. 5 is a schematic flowchart illustrating a method of producing a positive electrode active material according to the present embodiment.
Fig. 6 is a schematic perspective view illustrating a battery according to the present embodiment.
Fig. 7 is a schematic view of a cross section cut along the line VII-VII in Fig. 6.
Fig. 8 is a temperature profile during calcination.
Fig. 9 is a table showing experiment results.

DESCRIPTION OF THE PREFERRED EMBODIMENTS

- Terms and Phrases -

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are independent of the order and the significance of these elements.

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

A singular form may also include its plural meaning, unless otherwise specified. For example, a particle may mean a plurality of particles, a group of particles, and a powdery and granular material. "A plurality of particles" may also be called "a particle group".

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Each of "not less than" and "not more than" is represented by an inequality symbol with an equality symbol, e.g., "$\leq$, $>$". Each of "more than" and "less than" is represented by an inequality symbol without an equality symbol, e.g., "$<$, $>$". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values and the like is merely an example. It is possible to use a product similar to the apparatus and/or the like presented as an example. When a similar product is used, the measurement conditions may be adjusted to be suitable for the apparatus.

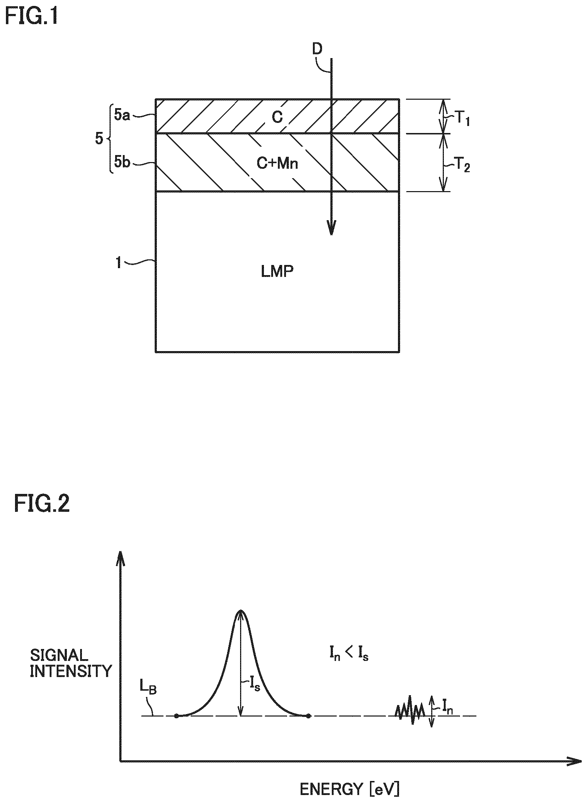

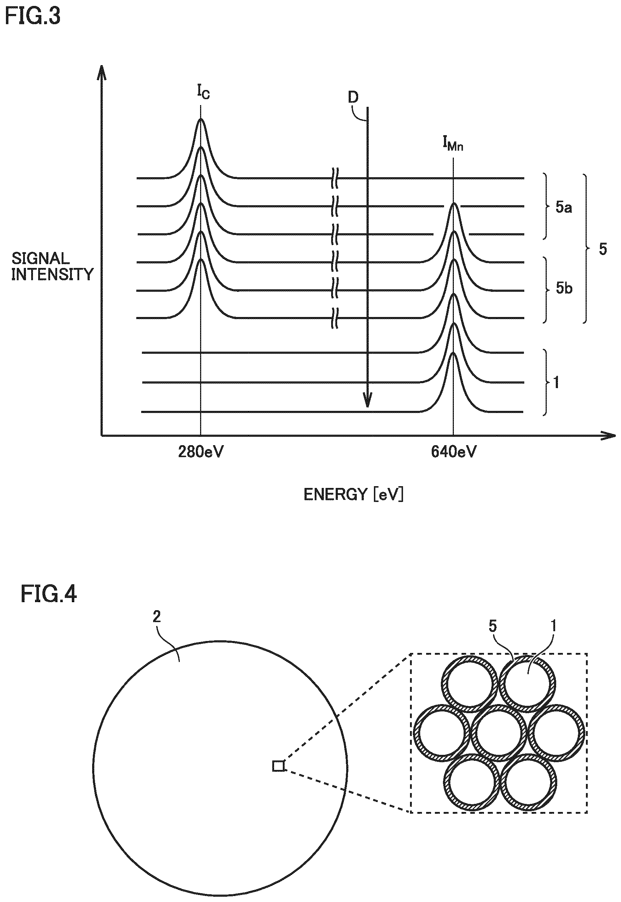

"TEM-EDS analysis" is carried out by the procedure described below. For example, a positive electrode active material (powder) is dispersed in ethanol to form a particle dispersion. For example, an ultrasonic disperser and/or the like may be used. The particle dispersion is added dropwise onto a grid that is designed for TEM. On the grid, the particle dispersion is dried. Primary particles on the grid are examined with a TEM. In the TEM image (a cross-sectional image), the primary particles (LMFP) exhibit a characteristic lattice pattern. The substance adhered to the outer side of the primary particles is regarded as "a covering". Fig. 1 is a conceptual view illustrating the area around the outermost surface of a primary particle. A radial direction D is the direction of a normal to the surface of a primary particle 1. Along the radial direction D, at regular intervals (at intervals of 0.5 nm), point analysis is carried out. Fig. 2 is a first descriptive view of analysis results. Regarding the peak for each point thus measured, a straight line passing through both ends of the peak is called a baseline $L_B$. With respect to the baseline $L_B$, the signal intensity (peak height) "$I_s$" of the peak top of the target peak is identified. The signal intensity "$I_n$" at a position located $+10$ eV away from the peak top is identified. When the relationship of "$I_n < I_s$" is satisfied, it is considered that the element corresponding to the target peak is detected. Fig. 3 is a second descriptive view of analysis results. A peak corresponding to carbon (C) appears at or near 280 eV. The signal intensity of the peak corresponding to carbon is "$I_C$". A peak corresponding to Mn appears at or near 640 eV. The signal intensity of the peak corresponding to Mn is "$I_{Mn}$". The entire region where Ic is detected is regarded as "a covering 5". The region where $I_C$ is not detected is regarded as "primary particle 1". The region where both Ic and $T_{Mn}$ are detected is regarded as "a second region 5b". The region of covering 5 except second region 5b is regarded as "a first region 5a". By the way, a peak corresponding to iron (Fe) appears at or near 710 eV. In the context of the position of a peak, "near" may mean $\pm 5$ eV and the like, for example.

In the TEM image (see Fig. 1), at three points located at regular intervals along the surface of primary particle 1, the thickness of covering 5, the thickness "$T_1$" of first region 5a, and the thickness "$T_2$" of second region 5b are measured. The arithmetic mean of the three points is regarded as the thickness of each region and the like.

"Maximum Feret diameter" refers to the length of the long side of the smallest circumscribing rectangular (an oblong or a square) that circumscribes the particle. When the circumscribing rectangular is square, the length of the long side refers to the length of a side.

"D50" refers to a particle size in volume-based particle size distribution (cumulative distribution) at which the cumulative value reaches 50%. The volume-based particle size distribution is measured with a laser-diffraction particle size distribution analyzer.

A stoichiometric composition formula represents a typical example of a compound. A compound may have a non-stoichiometric composition. For example, "$Al_2O_3$" is not limited to a compound where the ratio in amount of substance (the molar ratio) is "Al/O=2/3". "$Al_2O_3$" represents a compound that includes Al and O in any ratio in amount of substance, unless otherwise specified. For example, the compound may be doped with a trace element. Some of Al and/or O may be replaced by another element.

The chemical composition of a compound may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

- Positive Electrode Active Material -

Fig. 4 is a conceptual view illustrating a secondary particle according to the present embodiment. A positive electrode active material includes primary particles 1 and covering 5. "Primary particle 1" is the smallest constituent unit of a particle. Primary particles 1 are not necessarily aggregated together, and may be present in isolation. Isolated primary particles 1 as well as an aggregate of 10 or less primary particles 1 are also called single particles. Primary particles 1 may form a secondary particle 2. The positive electrode active material may be powder of secondary particles 2, for example. The D50 of the positive electrode active material may be 5 $\mu$m or more, or 10 $\mu$m or more, or 15 $\mu$m or more, or 20 $\mu$m or more, for example. The D50 of the positive electrode active material may be 30 $\mu$m or less, or 25 $\mu$m or less, or 20 $\mu$m or less, or 15 $\mu$m or less, or 10 $\mu$m or less, for example.

Secondary particle 2 is a group of primary particles 1. Secondary particle 2 may have any shape. Secondary particle 2 may be spherical, rod-like, prismatic, and/or the like, for example. When secondary particle 2 is spherical, packing properties and the like are expected to be enhanced, for example. The sphericity of secondary particle 2 may be 0.85 or more, or 0.90 or more, or 0.95 or more, for example. The sphericity of secondary particle 2 may be 1 or less, or 0.95 or less, or 0.90 or less, for example. "Sphericity" refers to the circularity in a scanning electron microscope (SEM) image (a two-dimensional image). The sphericity (circularity) is determined by the following equation.

$$\psi = 4\pi S/L^2$$

$\Psi$: Sphericity (circularity)
$\pi$: Circular constant
S: Cross-sectional area of secondary particle 2 (the area of a region surrounded by the contour of secondary particle 2)
L: Perimeter of secondary particle 2 (the length of the contour of secondary particle 2)

The sphericity refers to the arithmetic mean of 30 secondary particles 2.

Primary particle 1 may have any shape. Primary particle 1 may be spherical, rod-like, prismatic, and/or the like, for example. The maximum Feret diameter of primary particle 1 may be from 10 to 90 nm, for example. The maximum Feret diameter of primary particle 1 may be 20 nm or more, or 30 nm or more, or 40 nm or more, or 50 nm or more, or 60 nm or more, or 70 nm or more, or 80 nm or more, for example. The maximum Feret diameter of primary particle 1 may be 80 nm or less, or 60 nm or less, for example. The maximum Feret diameter of primary particle 1 refers to the arithmetic mean of 30 primary particles 1.

Covering 5 (Fig. 1) covers at least part of the surface of primary particle 1. Covering 5 may cover the entire surface of primary particle 1. The mass fraction of covering 5 relative to the mass of LMP may be 0.1% or more, or 0.5% or more, or 1% or more, or 2% or more, or 3% or more, or 4% or more. The mass fraction of covering 5 relative to the mass of LMP may be 5% or less, or 4% or less, or 3% or less.

Covering 5 (Fig. 1) includes first region 5a and second region 5b in the radial direction D. Each of first region 5a and second region 5b includes carbon. Each of first region 5a and second region 5b may include amorphous carbon and/or the like, for example. In TEM-EDS analysis, the signal intensity of Mn in second region 5b is more than the signal intensity of Mn in first region 5a. That is, it is conceivable that second region 5b includes Mn. It is conceivable that first region 5a may or may not include Mn.

The ratio of the signal intensity of Mn in second region 5b to the signal intensity of Mn in first region 5a may be 2 or more, or 5 or more, or 10 or more, or 50 or more, or 100 or more, or 1000 or more, for example.

For example, in first region 5a, Mn may not be detected. For example, in first region 5a, only carbon may be detected. For example, in second region 5b, Fe may further be detected in addition to carbon and Mn.

In the radial direction D, second region 5b may be positioned between first region 5a and primary particle 1, for example. Second region 5b may be in direct contact with primary particle 1. In the radial direction D, first region 5a may be positioned between second region 5b and primary particle 1, for example.

The thickness "$T_1$" of first region 5a and the thickness "$T_2$" of second region 5b may satisfy the relationship of "$0.5 < T_2/T_1$", for example. The thickness ratio "$T_2/T_1$" may be 0.6 or more, or 0.7 or more, or 0.8 or more, or 0.9 or more, or 1 or more, or 1.1 or more, or 1.2 or more, or 1.3 or more, or 1.4 or more, or 1.5 or more, for example. The thickness ratio "$T_2/T_1$" may be 5 or less, or 4 or less, or 3 or less, or 2.5 or less, or 2 or less, or 1.5 or less, or 1 or less, for example.

The thickness "$T_1$" of first region 5a may satisfy the relationship of "$1\,\mathrm{nm} < T_1 < 5\,\mathrm{nm}$", for example. The thickness "$T_1$" of first region 5a may be 1.1 nm or more, or 1.2 nm or more, or 1.5 nm or more, or 2 nm or more, or 2.5 nm or more, or 3 nm or more, or 3.5 nm or more, or 4 nm or more, or 4.5 nm or more, or 5 nm or more, for example. The thickness "$T_1$" of first region 5a may be 10 nm or less, or 9 nm or less, or 8 nm or less, or 7 nm or less, or 6 nm or less, or 5 nm or less, or 4 nm or less, or less than 3 nm, or 2 nm or less, for example.

Primary particle 1 includes LMP. The LMP has an olivine-type structure. "Olivine-type" refers to a crystal structure belonging to the space group Pnma. The space group is identified by X-ray diffraction (XRD) measurement of the powder. Primary particle 1 may be a single-phase compound, for example. As long as it includes an olivine-type crystalline phase, primary particle 1 may further include a phase that belongs to another space group. Primary particle 1 may further include an amorphous phase and/or the like, for example.

Primary particle 1 may include LMFP. LMFP is a subordinate concept to LMP. Primary particle 1 may include at least one of LMP and LMFP. Primary particle 1 may have a composition represented by the following general formula, for example.

$$Li_{1-a}Mn_{1-x}Fe_xPO_4$$

The relationship of "$-0.5 \leq a \leq 0.5$" may be satisfied, for example. x may be 0 or more, or 0.05 or more, or 0.1 or more, or 0.2 or more, or 0.3 or more, or 0.4 or more, or 0.5 or more, or 0.6 or more, or 0.7 or more, or 0.8 or more, or 0.9 or more, for example. x may be less than 1, or 0.9 or less, or 0.8 or less, or 0.7 or less, or 0.6 or less, or 0.5 or less, or 0.4 or less, or 0.3 or less, or 0.2 or less, or 0.1 or less, for example.

The LMP and the LMFP may be doped with an element (a dopant) other than lithium (Li), Mn, Fe, phosphorus (P), and oxygen (O). The doping amount (the fraction in amount of substance relative to the amount of substance of Li) may be from 0.01 to 0.1, for example. The dopant may include at least one selected from the group consisting of boron (B), nitrogen (N), a halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), strontium (Sr), yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and an actinoid, for example.

The positive electrode active material may further include another component as long as it includes LMP. This another component may include lithium iron phosphate (LFP), lithium-nickel composite oxide (LNO), lithium-cobalt composite oxide (LCO), lithium-manganese composite oxide (LMO), and/or the like, for example. The mixing ratio (in mass) between LMP and the another component may be "LMP/(another component)=9/1 to 1/9", or "LMP/(another component)=8/2 to 2/8", or "LMP/(another component)=7/3 to 3/7", or "LMP/(another component)=6/4 to 4/6", for example. The positive electrode active material may be a mixture of powder of LMP and powder of the another component, for example.

The LFP may have a composition represented by the general formula "$Li_{1-a}FePO_4$ ($-0.5 \leq a \leq 0.5$)", for example.

The LNO may have a crystal structure belonging to the space group R-3m, for example. The LNO may have a composition represented by the following general formula, for example.

$$Li_{1-a}Ni_xM_{1-x}O_2$$

In the formula, the relationships of $-0.5 \leq a \leq 0.5$, $0 \leq x \leq 1$ are satisfied. M may include, for example, at least one selected from the group consisting of Co, Mn, and Al. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, the relationship of $-0.4 \leq a \leq 0.4$, $-0.3 \leq a \leq 0.3$, $-0.2 \leq a \leq 0.2$, or $-0.1 \leq a \leq 0.1$ may be satisfied.

The LNO may include at least one selected from the group consisting of $LiNi_{0.9}Co_{0.1}O_2$, $LiNi_{0.9}Mn_{0.1}O_2$, and $LiNiO_2$, for example.

The LNO may be represented by the following general formula, for example. A compound represented by the following general formula may also be called "NCM".

$$Li_{1-a}Ni_xCo_yMn_zO_2$$

In the formula, the relationships of $-0.5 \leq a \leq 0.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCM may include at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$, for example.

The LNO may be represented by the following general formula, for example. A compound represented by the following general formula may also be called "NCA".

$$Li_{1-a}Ni_xCo_yAl_zO_2$$

In the formula, the relationships of $-0.5 \leq a \leq 0.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$, for example.

- Method of Producing Positive Electrode Active Material -

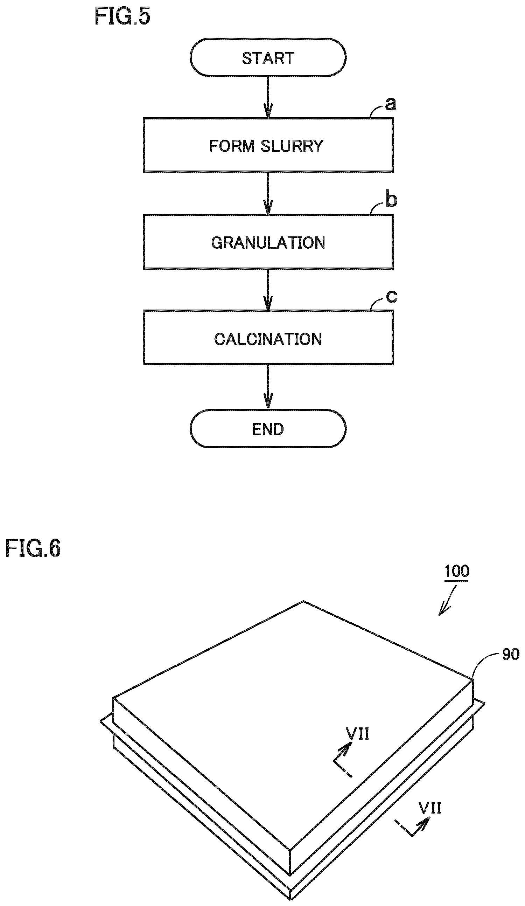

Fig. 5 is a schematic flowchart illustrating a method of producing a positive electrode active material according to the present embodiment. Hereinafter, "the method of producing a positive electrode active material according to the present embodiment" may be simply called "the present method". The present method may include "(a) forming a slurry", "(b) granulation", "(c) calcination", and the like, for example.

(a) Forming Slurry

The present method may include forming a slurry by mixing a lithium compound, a manganese compound, a phosphate compound, a carbon source, and a solvent. For example, the lithium compound, the manganese compound, an iron compound, and the phosphate compound may be prepared in amounts that satisfy the composition ratio (in amount of substance) specified in the composition formula "$Li_{1-a}Mn_{1-x}Fe_xPO_4$ ($-0.5 \leq a \leq 0.5$, $0 < x < 1$)". The lithium compound may include lithium hydroxide and/or the like, for example. The manganese compound may include manganese carbonate and/or the like, for example. The iron compound may include ferric phosphate and/or the like, for example. The phosphate compound may include lithium dihydrogen phosphate and/or the like, for example.

The carbon source is a raw material of the covering. The carbon source may include a sugar, an organic acid, and/or the like, for example. The carbon source may include glucose, sucrose, fructose, citric acid, and/or the like, for example. The amount of the carbon source to be added in mass fraction relative to the raw material mixture may be from 1 to 20%, for example.

The solvent may include water and/or the like, for example. The solid concentration of the slurry in mass fraction may be from 20 to 40%, for example.

Wet grinding may be carried out to adjust the particle size in the slurry. For example, wet grinding may be carried out to achieve a D50 from 0.10 to 1 μm.

(b) Granulation

The present method may include granulation, namely drying the slurry to produce secondary particles (precursors). For example, spray drying may be carried out for granulation to produce secondary particles. Secondary particles formed by granulation operation are also called "granules". That is, the secondary particles may also be called granules.

Regarding the spray dryer, various settings may be set as follows, for example.

Temperature at air inlet: About 200°C
Spray rate: About 10 mL/min
Spray pressure (nozzle pressure): About 0.2 MPa

(c) Calcination

The present method may include performing heat treatment of the secondary particles (precursors) to produce LMP. Any heat treatment furnace (such as, for example, an electric furnace, a muffle furnace, and/or the like) may be used. The heat treatment atmosphere may be an inert atmosphere, for example. The inert atmosphere may be a nitrogen atmosphere and/or the like, for example. The heat treatment temperature may be from 400 to 700°C, for example. The heat treatment time may be from 4 to 6 hours, for example.

Here, during the temperature-raising process in the calcination, instead of continuously raising the temperature, it is possible to temporarily pause raising the temperature at or near 300°C and maintain the temperature (300°C) for about 1 hour to form a multiphase region (carbon+Mn) on the surface of the primary particles. From mass-spectrum analysis results, it is presumed that at or near 300°C, a component not contributing to covering is discharged from the system in the form of gas and a tar component in the carbon source reacts with the surface of the primary particles (LMP) to form a multiphase region.

- Liquid-Type Battery -

In some present embodiments, the battery may be a liquid-type battery. "Liquid-type battery" refers to a battery that includes an electrolyte solution. For example, a polymer battery includes an electrolyte solution and is therefore a liquid-type battery. In some present embodiments, the battery has a monopolar structure. In some present embodiments, the battery has a bipolar structure. As an example, a battery having a bipolar structure (a bipolar battery) will be described.

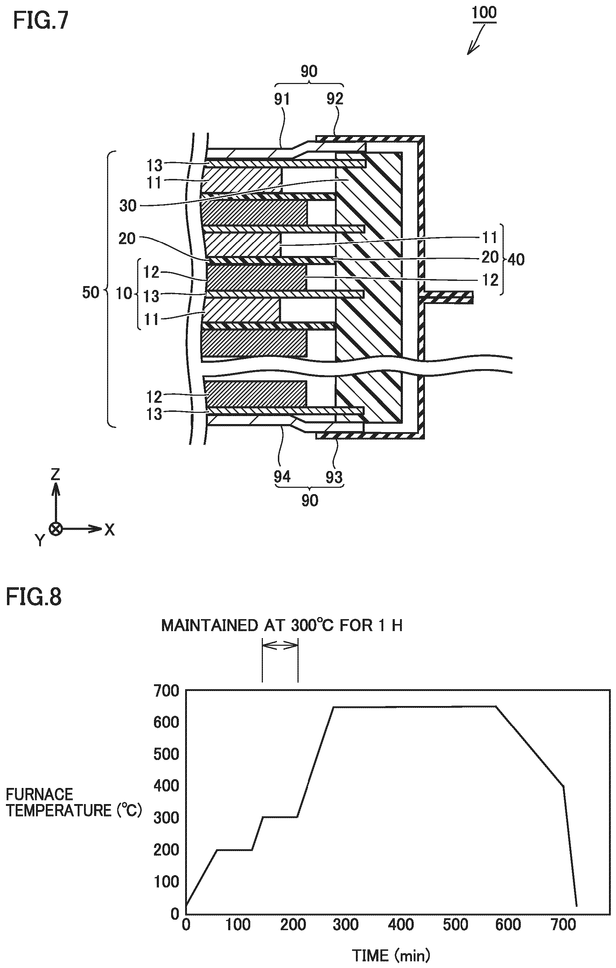

Fig. 6 is a schematic perspective view illustrating a battery according to the present embodiment. Fig. 7 is a schematic view of a cross section cut along the line VII-VII in Fig. 6. Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In the drawings related to the present embodiment, the Z-axis direction corresponds to the perpendicular-to-plane direction. Each of the X-axis direction and the Y-axis direction is an example of an in-plane direction.

A battery 100 includes an exterior package 90 and a power generation element 50. Exterior package 90 accommodates power generation element 50. Exterior package 90 may include a first current collector plate 91, a first laminated film 92, a second laminated film 93, and a second current collector plate 94, for example. First laminated film 92 and second laminated film 93 are joined to each other at an end in an in-plane direction. At the joint portion between first laminated film 92 and second laminated film 93, a sealing material (not illustrated) may be interposed between first laminated film 92 and second laminated film 93.

At the ends in the stacking direction (the Z-axis direction), first current collector plate 91 and second current collector plate 94 are joined to power generation element 50, respectively. First laminated film 92 is joined to first current collector plate 91. Second laminated film 93 is joined to second current collector plate 94. At the joint portion between the current collector plate and the laminated film, a sealing material (not illustrated) may be interposed between the current collector plate and the laminated film.

Power generation element 50 includes a plurality of bipolar electrodes 10. Bipolar electrodes 10 are stacked in the perpendicular-to-plane direction (the Z-axis direction). In the perpendicular-to-plane direction, each bipolar electrode 10 includes a positive electrode layer 11, a current-collecting foil sheet 13, and a negative electrode layer 12 in this order. In an in-plane direction (for example, the X-axis direction), current-collecting foil sheet 13 extends outwardly beyond positive electrode layer 11 and negative electrode layer 12. For example, current-collecting foil sheet 13 may extend outwardly beyond positive electrode layer 11 and negative electrode layer 12 for the entire periphery in an in-plane direction.

Current-collecting foil sheet 13 is a conductor. For example, current-collecting foil sheet 13 may include a metal foil sheet, an electrically-conductive resin layer, and/or the like. For example, current-collecting foil sheet 13 may be formed by bonding an Al foil sheet and a Cu foil sheet together. A surface of current-collecting foil sheet 13 may have a carbon material applied thereto. The carbon material may include carbon black and/or the like, for example.

Power generation element 50 includes a sealing material 30. At an end in an in-plane direction, sealing material 30 is attached to current-collecting foil sheet 13. For example, sealing material 30 may be heat-sealed to current-collecting foil sheet 13. For example, sealing material 30 may be provided along the entire periphery in an in-plane direction. The sealing material may include a resin material and/or the like, for example. Sealing material 30 seals interstices between current-collecting foil sheets 13 that are adjacent to each other in the perpendicular-to-plane direction. The interstices between current-collecting foil sheets 13 are thus sealed with sealing material 30, and thereby cells 40 are formed. A cell 40 is the smallest constituent unit of power generation element 50. Because it includes a plurality of cells 40, battery 100 may also be referred to as "a bipolar module". Each of cells 40 is hermetically sealed. Cells 40 are segregated from each other. Each of cells 40 includes positive electrode layer 11, a separator 20, negative electrode layer 12, and an electrolyte solution.

Positive Electrode Layer

Positive electrode layer 11 is adhered to one side of current-collecting foil sheet 13. For example, a groove may be formed in positive electrode layer 11. Positive electrode layer 11 may be formed in stripes, for example. Positive electrode layer 11 includes a positive electrode active material. That is, battery 100 includes a positive electrode active material. The details of the positive electrode active material are as described above.

In addition to the positive electrode active material, positive electrode layer 11 may further include a conductive material, a binder, and the like, for example. The amount of the conductive material to be used may be, for example, from 0.1 to 10 parts by mass relative to 100 parts by mass of the positive electrode active material. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

The amount of the binder to be used may be, for example, from 0.1 to 10 parts by mass relative to 100 parts by mass of the positive electrode active material. The binder may include any component. The binder may include at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these, for example.

Positive electrode layer 11 may further include an inorganic filler, an organic filler, a solid electrolyte, a surface modifier, a dispersant, a lubricant, a flame retardant, a protective agent, a flux, a coupling agent, an adsorbent, and/or the like, for example. The positive electrode active material layer may include polyoxyethylene allylphenyl ether phosphate, zeolite, silane coupling agent, $MoS_2$, $WO_3$, and/or the like, for example.

Negative Electrode Layer

Negative electrode layer 12 is adhered to one side of current-collecting foil sheet 13. Negative electrode layer 12 is positioned on the opposite side to the side on which positive electrode layer 11 is positioned. The area of negative electrode layer 12 may be greater than that of positive electrode layer 11. Negative electrode layer 12 includes a negative electrode active material.

The negative electrode active material may be in particle form, or may be in sheet form, for example. The D50 of the negative electrode active material may be 1 $\mu$m or more, or 5 $\mu$m or more, or 10 $\mu$m or more, for example. The D50 of the negative electrode active material may be 30 $\mu$m or less, or 20 $\mu$m or less, or 15 $\mu$m or less, or 10 $\mu$m or less, for example.

The negative electrode active material may include any component. The negative electrode active material may include at least one selected from the group consisting of carbon-based active material, alloy-based active material, Si-C composite material, Li metal, Li-based alloy, and lithium titanate, for example. In some present embodiments, the battery may be a Li-metal negative electrode battery.

The carbon-based active material may include at least one selected from the group consisting of graphite, soft carbon, and hard carbon, for example. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The surface of the graphite may be covered with amorphous carbon, for example. The surface of the graphite may be covered with another type of material, for example. This another type of material may include at least one selected from the group consisting of P, W, Al, and O, for example. The another type of material may include at least one selected from the group consisting of $Al(OH)_3$, $AlOOH$, $Al_2O_3$, $WO_3$, $Li_2CO_3$, $LiHCO_3$, and $Li_3PO_4$, for example.

The alloy-based active material may include at least one selected from the group consisting of Si, Li silicate, SiO, Si-based alloy, tin (Sn), SnO, and Sn-based alloy, for example.

SiO may be represented by the following general formula, for example.

$$SiO_x$$

In the formula, the relationship of $0<x<2$ is satisfied. For example, the relationship of $0.5 \leq x \leq 1.5$ or $0.8 \leq x \leq 1.2$ may be satisfied.

"Si-C composite material" refers to a composite material composed of a carbon-based active material (such as graphite) and an alloy-based active material (such as Si). For example, Si microparticles may be dispersed inside carbon particles. For example, Si microparticles may be dispersed inside graphite particles. For example, Li silicate particles may be covered with a carbon material (such as amorphous carbon).

Separator

Separator 20 is capable of separating positive electrode layer 11 from negative electrode layer 12. Separator 20 is electrically insulating. Separator 20 may include at least one selected from the group consisting of a resin film (a polymer film), an inorganic particle layer, and an organic particle layer, for example. Separator 20 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The resin film may have an average pore size of 1 μm or less, for example. The resin film may have an average pore size from 0.01 to 1 μm, or from 0.1 to 0.5 μm, for example. "Average pore size" may be measured by mercury porosimetry. The resin film may have a Gurley value from 50 to 250 s/100cm$^3$, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these, for example. The resin film may be formed by stretching, phase separation, and/or the like, for example. The resin film may have a thickness from 5 to 50 μm, or from 10 to 25 μm, for example.

The resin film may have a monolayer structure. The resin film may be made of a PE layer, for example. A skeleton of a PE layer is formed of PE. The PE layer may have shut-down function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 μm, for example. The thickness of the PP layer may be from 3 to 10 μm, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode layer 11, or may be formed on the side facing the negative electrode layer 12. The inorganic particle layer may be formed on the surface of positive electrode layer 11, or may be formed on the surface of negative electrode layer 12.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 μm, or from 1 to 5 μm, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 μm, or from 0.5 to 3 μm, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

Separator 20 may include an organic particle layer, for example. Separator 20 may include an organic particle layer instead of the resin film, for example. Separator 20 may include an organic particle layer instead of the inorganic particle layer, for example. Separator 20 may include both the resin film and an organic particle layer. Separator 20 may include both the inorganic particle layer and an organic particle layer. Separator 20 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 20 may include a mixed layer, for example. The mixed layer includes both inorganic particles and organic particles.

Electrolyte Solution

The electrolyte solution is a liquid electrolyte. The electrolyte solution includes a solute and a solvent. The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these, for example.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate)=3/7 to 1/9", for example.

The solvent may include EC, FEC, EMC, DMC, and DEC, for example. The volume ratio of these components may satisfy the relationship represented by the following equation, for example.

$$V_{EC}+V_{FEC}+V_{EMC}+V_{DMC}+V_{DEC}=10$$

In the above equation, each of $V_{EC}$, $V_{FEC}$, $V_{EMC}$, $V_{DMC}$, and $V_{DFC}$ represents the volume ratio of EC, FEC, EMC, DMC, and DEC, respectively.

The relationships of $1 \leq V_{EC} \leq 4$, $0 \leq V_{FEC} \leq 3$, $V_{EC}+V_{FEC} \leq 4$, $0 \leq V_{EMC} \leq 9$, $0 \leq V_{DMC} \leq 9$, $0 \leq V_{DEC} \leq 9$, $6 \leq V_{EMC}+V_{DMC}+V_{DEC} \leq 9$ are satisfied.

For example, the relationship of $1 \leq V_{EC} \leq 2$ or $2 \leq V_{EC} \leq 3$ may be satisfied.

For example, the relationship of $1 \leq V_{FEC} \leq 2$ or $2 \leq V_{FEC} \leq 4$ may be satisfied.

For example, the relationship of $3 \leq V_{EMC} \leq 4$ or $6 \leq V_{EMC} \leq 8$ may be satisfied.

For example, the relationship of $3 \leq V_{DMC} \leq 4$ or $6 \leq V_{DMC} \leq 8$ may be satisfied.

For example, the relationship of $3 \leq V_{DEC} \leq 4$ or $6 \leq V_{DEC} \leq 8$ may be satisfied.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FEC/DMC/EMC=1/2/3/4" (volume ratio), and/or the like, for example.

The electrolyte solution may include an ether-based solvent. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), ethylene sulfate (DTD), $\gamma$-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as a trace component (an additive). The additive may include at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these, for example.

The electrolyte solution may include an ionic liquid. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

In some present embodiments, the battery may include a gelled electrolyte. In other words, the battery may be a polymer battery. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

- All-Solid-State Battery -

In some present embodiments, the battery may be an all-solid-state battery. The all-solid-state battery may have a bipolar structure. The all-solid-state battery includes a solid electrolyte instead of the electrolyte solution and separator 20. A solid electrolyte may also be included in positive electrode layer 11 and negative electrode layer 12. Instead of separator 20, a solid electrolyte layer separates positive electrode layer 11 from negative electrode layer 12. The solid electrolyte layer includes a solid electrolyte and a binder, for example.

The solid electrolyte may be a powdery and granular material, for example. The D50 of the solid electrolyte may be 0.1 $\mu$m or more, or 0.2 $\mu$m or more, or 0.3 $\mu$m or more, or 0.4 $\mu$m or more, or 0.5 $\mu$m or more, or 0.6 $\mu$m or more, or 0.7 $\mu$m or more, or 0.8 $\mu$m or more, or 0.9 $\mu$m or more, or 1 $\mu$m or more, for example. The D50 of the solid electrolyte may be 5 $\mu$m or less, or 4 $\mu$m or less, or 3 $\mu$m or less, or 2 $\mu$m or less, or 1 $\mu$m or less, for example.

The solid electrolyte may include at least one selected from the group consisting of a sulfide solid electrolyte, a halide solid electrolyte, an oxide solid electrolyte, a hydride solid electrolyte, and a nitride solid electrolyte, for example.

The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte includes Li and sulfur (S). In addition to Li and S, the sulfide solid electrolyte may further include any component.

The sulfide solid electrolyte may include at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-GeS_2-P_2S_3$, $Li_2S-P_2S_5$, $Li_{10}GeP_2S_{12}$, $Li_4P_2S_6$, $Li_7P_3S_{11}$, $Li_3PS_4$, and $Li_7PS_6$, for example.

For example, "$LiI-LiBr-Li_3PS_4$" refers to a sulfide solid electrolyte produced by mixing LiI, LiBr, and $Li_3PS_4$ in a freely-selected ratio in terms of amount of substance. For example, the sulfide solid electrolyte may be produced by a mechanochemical method. The mixing ratio may be expressed with the number placed in front of each raw material. For example, "$10LiI-15LiBr-75Li_3PS_4$" means that the mixing ratio is "$LiI/LiBr/Li_3PS_4=10/15/75$ (in amount of substance)".

The sulfide solid electrolyte may have a composition represented by the following general formula, for example.

$$xLi_2S\text{-}(1\text{-}x)P_2S_5$$

In the formula, x may be more than 0, or 0.1 or more, or 0.2 or more, or 0.25 or more, or 0.3 or more, or 0.4 or more, or 0.5 or more, or 0.6 or more, or 0.7 or more, or 0.75 or more, or 0.8 or more, or 0.9 or more, for example. x may be 1 or less, or 0.9 or less, or 0.8 or less, or 0.7 or less, or 0.75 or less, or 0.6 or less, or 0.5 or less, or 0.4 or less, or 0.3 or less, or 0.2 or less, or 0.1 or less, for example. For example, when x is 0.75, "$xLi_2S\text{-}(1\text{-}x)P_2S_5$" may have a composition of $Li_3PS_4$.

The sulfide solid electrolyte may have a composition represented by the following general formula, for example.

$$yLiI\text{-}zLiBr\text{-}(100\text{-}y\text{-}z)[xLi_2S\text{-}(1\text{-}x)P_2S_5]$$

In the formula, x may be 0.5 or more, or 0.6 or more, or 0.7 or more, or 0.75 or more, or 0.8 or more, or 0.9 or more, for example. x may be 1 or less, or 0.9 or less, or 0.8 or less, or 0.75 or less, or 0.7 or less, or 0.6 or less, for example. y may be 0 or more, or 5 or more, or 10 or more, or 15 or more, or 20 or more, or 25 or more, for example. y may be 30 or less, or 25 or less, or 20 or less, or 15 or less, or 10 or less, or 5 or less, for example. z may be 0 or more, or 5 or more, or 10 or more, or 15 or more, or 20 or more, or 25 or more, for example. z may be 30 or less, or 25 or less, or 20 or less, or 15 or less, or 10 or less, or 5 or less, for example.

The sulfide solid electrolyte may have a composition represented by the following general formula, for example.

$$Li_{7\text{-}x\text{-}2y}PS_{6\text{-}x\text{-}y}X_y$$

In the formula, relationships of "0<(7-x-2y)", "0<(6-x-y)", "0≤x", and "0≤y" are satisfied. X may include at least one selected from the group consisting of fluorine (F), chlorine (Cl), bromine (Br), and iodine (I), for example.

The sulfide solid electrolyte may have a composition represented by the following general formula, for example.

$$Li_{4\text{-}x}M_{1\text{-}x}P_xS_4$$

In the formula, x may be more than 0, or 0.1 or more, or 0.2 or more, or 0.3 or more, or 0.4 or more, or 0.5 or more, or 0.6 or more, or 0.7 or more, or 0.8 or more, or 0.9 or more, for example. x may be less than 1, or 0.9 or less, or 0.8 or less, or 0.7 or less, or 0.6 or less, or 0.5 or less, or 0.4 or less, or 0.3 or less, or 0.2 or less, or 0.1 or less, for example. M may include at least one selected from the group consisting of Al, Zn, In, Ge, Si, Sn, Sb, Ga, and Bi, for example.

The sulfide solid electrolyte may have a composition represented by the following general formula, for example.

$$Li_{10+x}Ge_{1+x}P_{2\text{-}x}S_{12}$$

In the formula, x may be 0 or more, or 0.1 or more, or 0.2 or more, or 0.3 or more, or 0.4 or more, or 0.5 or more, or 0.6 or more, for example. x may be 0.7 or less, or 0.6 or less, or 0.5 or less, or 0.4 or less, or 0.3 or less, or 0.2 or less, or 0.1 or less, for example. A sulfide solid electrolyte represented by the above general formula may include an LGPS-type crystalline phase, for example.

The halide solid electrolyte may have a composition represented by the following general formula, for example.

$$Li_{6\text{-}na}M_aX_6$$

In the formula, n represents an oxidation number of M. For example, M may include an atom whose oxidation number is +3. For example, M may include an atom whose oxidation number is +4. M may include at least one selected from the group consisting of Y, Al, Ti, Zr, Ca, and Mg, for example. The relationship of "0<a<2" may be satisfied, for example. X may include at least one selected from the group consisting of F, Cl, Br, and I, for example.

The halide solid electrolyte may have a composition represented by the following general formula, for example.

$$Li_{3\text{-}a}Ti_aAl_{1\text{-}a}F_6$$

In the formula, a may be 0 or more, or 0.1 or more, or 0.2 or more, or 0.3 or more, or 0.4 or more, or 0.5 or more, or 0.6 or more, or 0.7 or more, or 0.8 or more, or 0.9 or more, for example. a may be 1 or less, or 0.9 or less, or 0.8 or less, or 0.7 or less, or 0.6 or less, or 0.5 or less, or 0.4 or less, or 0.3 or less, or 0.2 or less, or 0.1 or less, for example.

The halide solid electrolyte may have a composition represented by the following general formula, for example.

$$Li_3YCl_aBr_bI_{6\text{-}a\text{-}b}$$

In the formula, the relationship of "0≤(a+b)≤6" may be satisfied, for example. a may be 0 or more, or 1 or more, or 2 or more, or 3 or more, or 4 or more, or 5 or more, for example. a may be 6 or less, or 5 or less, or 4 or less, or 3 or less, or 2 or less, or 1 or less, for example. b may be 0 or more, or 1 or more, or 2 or more, or 3 or more, or 4 or more, or 5 or more, for example. b may be 6 or less, or 5 or less, or 4 or less, or 3 or less, or 2 or less, or 1 or less, for example.

The oxide solid electrolyte may include at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$, for example. The hydride solid electrolyte may include $LiBH_4$ and/or the like, for example. The nitride solid electrolyte may include $Li_3N$, $Li_3BN_2$, and/or the like, for example.

[Examples]

- Production of Positive Electrode Active Material -

No. 1

(a) Forming Slurry

Lithium hydroxide monohydrate, manganese carbonate, ferric phosphate, and lithium dihydrogen phosphate were prepared in amounts that satisfied the composition ratio specified in the composition formula "$Li_{1.04}Mn_{0.6}Fe_{0.4}PO_4$". Glucose was prepared in an amount of 8% in mass fraction relative to the total mass of the raw materials. The materials thus prepared and water were mixed together to form a slurry. The solid concentration of the slurry was 30% in mass fraction. Wet grinding was carried out to achieve a D50 of 0.30 μm.

(b) Granulation

The slurry was spray dried to form secondary particles. The settings of the spray dryer were as follows.

Temperature at air inlet: 200°C
Spray rate: 10 mL/min
Spray pressure (nozzle pressure): 0.2 MPa
(c) Calcination

Inside an electric furnace, in an inert atmosphere, the secondary particles were calcined, and thereby LMP (LMFP) was synthesized. Fig. 8 is a temperature profile during calcination. Firstly, the furnace temperature is raised at a temperature raising rate of 3°C/minute to reach 200°C. The furnace temperature is maintained at 200°C for 1 hour. Then, the furnace temperature is raised at a temperature raising rate of 5°C/minute to reach 300°C. The furnace temperature is maintained at 300°C for 1 hour. Then, the furnace temperature is raised at a temperature raising rate of 5°C/minute to reach 650°C. The furnace temperature is maintained at 650°C for 5 hours. Subsequently, the furnace temperature is lowered at a temperature lowering rate of 2°C/minute to reach 400°C. Furthermore, the furnace temperature is lowered at a temperature lowering rate of 15°C/minute to reach room temperature.

No. 2

Except that during "(c) calcination" above, the temperature was not maintained at 300°C and instead the furnace temperature was raised from 200°C to 650°C at a temperature raising rate of 5°C/minute, the same operation as in No. 1 was carried out to synthesize LMFP.

- Evaluation -

Preparation of Coin Cell

The positive electrode active material, a conductive material (acetylene black) and a binder (PVdF) were mixed together to form a mixture. The mixing ratio (in mass) was "(positive electrode active material)/(conductive material)/-binder=92/5/3". The mixture was dispersed in a solvent (N-methyl-2-pyrrolidone) to form a paste. The solid concentration of the paste was 50% in mass fraction. The paste was applied to the surface of an Al foil sheet, followed by drying, and thereby a positive electrode layer was formed. The density of the positive electrode layer was adjusted to 1.8 $g/cm^3$ with a roll press, and thereby a positive electrode raw sheet was formed. The positive electrode raw sheet was vacuum dried at 120°C for 12 hours. After drying, the positive electrode raw sheet was die-cut to form a disk-shaped sample (diameter, 14 mm).

Inside a glove box, a coin cell was assembled. The cell configuration is as described below.

Working electrode: Disk-shaped sample (positive electrode)
Counter electrode: Li foil sheet
Separator: Porous polymer film
Electrolyte solution: "EC/DMC=3/7 (in volume)", $LiPF_6$ (1 mol/L)
Endurance

By the procedure described below, capacity retention was measured. It is conceivable that the greater the capacity retention is, the better the endurance is.

Based on the discharged capacity (stoichiometric capacity) calculated from the mass of the applied positive electrode layer, the rate corresponding to 1 C is determined. "C" is a symbol denoting a rate of current (an hour rate). At a rate of 1 C, stoichiometric capacity is charged or discharged in 1 hour. The coin cell is charged at 25°C by constant current-constant voltage (CCCV) charging under the conditions described below.

Rate of CC charging: 0.1 C
Upper limit to charging voltage: 4.3 V
Rate of cut current during CV charging: 0.01 C

After charging, CC discharging is carried out at 25°C at a rate of 0.1 C to reach 3.0 V, and initial capacity "A" is measured.

At 25°C, 50 cycles of CC charging and discharging are carried out. After 50 cycles, similarly to initial capacity, post-cycle capacity "B" is measured. By division "B/A", capacity retention is determined.

- Results -

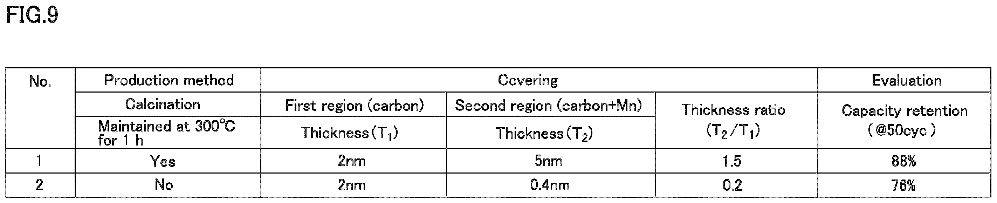

Fig. 9 is a table showing experiment results. The thicker the second region (carbon+Mn) is, the more enhanced the endurance tends to be.

It should be noted that when carbon covering of primary particles (LMP) is carried out by a mechanochemical method, for example, the second region (carbon+Mn) may not be formed. Conventionally, it is observed that when carbon covering is carried out by a mechanochemical method, endurance tends to be degraded. Hence, it is conceivable that when the covering includes a second region (carbon+Mn), endurance is enhanced.

**Claims**

1. A positive electrode active material comprising:

a primary particle (1); and
a covering (5), wherein
the primary particle (1) includes lithium manganese phosphate,
the covering (5) covers at least part of a surface of the primary particle (1),
in a radial direction of the primary particle (1), the covering (5) includes a first region (5a) and a second region (5b),
each of the first region (5a) and the second region (5b) includes carbon, and
in TEM-EDS analysis, signal intensity of manganese in the second region (5b) is more than signal intensity of manganese in the first region (5a).

2. The positive electrode active material according to claim 1, wherein the first region (5a) and the second region (5b) satisfy a relationship below:

$$0.5 < T_2/T_1$$

where

$T_1$ represents a thickness of the first region (5a) in the radial direction, and
$T_2$ represents a thickness of the second region (5b) in the radial direction.

3. The positive electrode active material according to claim 1, wherein in the radial direction, the second region (5b) is positioned between the first region (5a) and the primary particle (1).

4. The positive electrode active material according to any one of claims 1 to 3, wherein in the TEM-EDS analysis, only carbon is detected in the first region (5a).

5. The positive electrode active material according to any one of claims 1 to 3, wherein

the primary particle (1) includes lithium manganese iron phosphate, and
in the TEM-EDS analysis, carbon, manganese, and iron are detected in the second region (5b).

6. The positive electrode active material according to claim 2, wherein the first region (5a) satisfies a relationship below:

$$1 \text{ nm} < T_1 < 5 \text{ nm}.$$

7. The positive electrode active material according to claim 6, wherein the first region (5a) satisfies a relationship below:

$$1 \text{ nm} < T_1 < 3 \text{ nm}.$$

8. An electrode comprising:

a positive electrode layer (11), wherein
the positive electrode layer (11) includes the positive electrode active material according to any one of claims 1 to 3.

9. A battery comprising the electrode (10) according to claim 8.

10. The battery according to claim 9, having a bipolar structure.

FIG.1

FIG.2

FIG.3

FIG.4

FIG.5

```
        ┌─────────────┐
        │    START    │
        └──────┬──────┘
               │
               ▼              ╭a
        ┌──────────────────┐
        │   FORM SLURRY    │
        └──────┬───────────┘
               │
               ▼              ╭b
        ┌──────────────────┐
        │   GRANULATION    │
        └──────┬───────────┘
               │
               ▼              ╭c
        ┌──────────────────┐
        │   CALCINATION    │
        └──────┬───────────┘
               │
               ▼
        ┌─────────────┐
        │     END     │
        └─────────────┘
```

FIG.6

FIG.7

FIG.8

MAINTAINED AT 300°C FOR 1 H

FURNACE TEMPERATURE (°C)

TIME (min)

# FIG.9

| No. | Production method | Covering | | | Evaluation |
| | Calcination | First region (carbon) | Second region (carbon+Mn) | Thickness ratio $(T_2/T_1)$ | Capacity retention (@50cyc) |
| | Maintained at 300°C for 1 h | Thickness $(T_1)$ | Thickness $(T_2)$ | | |
| 1 | Yes | 2nm | 5nm | 1.5 | 88% |
| 2 | No | 2nm | 0.4nm | 0.2 | 76% |

Europäisches
Patentamt

European
Patent Office

Office européen
des brevets

# EUROPEAN SEARCH REPORT

**Application Number**

EP 25 19 8459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 439 707 A1 (AESC JAPAN LTD [JP]) 2 October 2024 (2024-10-02) * paragraphs [0004] - [0006], [0021] - [0025]; claims 1-5,7; figure 1 * ----- | 1-10 | INV. H01M4/36 H01M4/58 H01M4/62 H01M10/0525 C01B25/00 |

**TECHNICAL FIELDS SEARCHED (IPC)**

H01M
C01B

The present search report has been drawn up for all claims

| Place of search | Date of completion of the search | Examiner |
|---|---|---|
| Munich | 20 January 2026 | Mugnaini, Veronica |

EPO FORM 1503 03.82 (P04C01)

## ANNEX TO THE EUROPEAN SEARCH REPORT
## ON EUROPEAN PATENT APPLICATION NO.

EP 25 19 8459

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2026

| Patent document cited in search report | | Publication date | Patent family member(s) | | Publication date |
|---|---|---|---|---|---|
| EP 4439707 | A1 | 02-10-2024 | CN | 118782749 A | 15-10-2024 |
| | | | EP | 4439707 A1 | 02-10-2024 |
| | | | JP | 7716831 B2 | 01-08-2025 |
| | | | JP | 2024146736 A | 15-10-2024 |
| | | | US | 2024332504 A1 | 03-10-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024175755 A

- JP 2019149355 A